# EUROPEAN PATENT APPLICATION

(11) **EP 1 585 131 A1**
(43) Date of publication of application: **12.10.2005**
(21) Application number: 04008271.1
(22) Date of filing: 06.04.2004
(51) Int. Cl.: G11B 20/14, G11B 27/19

(54) **Circuit for wobble demodulation**

(71) Applicant: DEUTSCHE THOMSON-BRANDT GMBH, 78048 Villingen-Schwenningen (DE)
(72) Inventor: Lo Muzio, Pierluigi, 78048 Villingen-Schwenningen (DE); Kabutz, Marten, 78052 Villingen (DE)
(74) Representative: Thies, Stephan

(57) **Abstract**

Disclosed is a circuit for wobble demodulation from a signal obtained from an optical recording medium.
The circuit is provided with a digital demodulator (1) for demodulating a wobble signal including at least one inverted wobble (NW) from a signal obtained from an optical recording medium, which is not a suppressed carrier signal, and a Costas loop correction block (10) for the inverted wobbles.

## Description

The present invention relates to a circuit for wobble demodulation from a signal obtained from an optical recording medium, and to an apparatus for reading from and/or writing to optical recording media using such circuit.

In a recorder for a recording medium such as DVD+RW or BluRay Disk (also referred to as BD below) one or more phase locked loops are needed for the synchronization of the recorder.
The synchronization concerns two distinct aspects.
1. The decoding of ADIP (Address in Pre-groove) words to retrieve the physical address, which is needed to access specific locations of the recording medium during the recording.
2. The generation of a clock for the recording of channel data, so that a write laser writes the channel data synchronously with the rotation speed of the recording medium.

The decoding of ADIP words is only possible after the demodulation of the wobble signal. The recording medium does not rotate exactly at the proper speed for reading the wobble signal at the precise frequency, because of eccentricity and the fact that the servo control loop continuously changes the speed. Therefore, a precise timing of the wobble is necessary for the demodulation.
Considering that the wobble signal is a noisy signal, a phase locked loop (PLL) is a suitable solution for the clock retrieval rejecting the noise.
If a digital phase locked loop (DPLL) is employed, it generates a clock, which is locked to the incoming wobble. An included digital controlled oscillator (DCO) further generates a digital saw-tooth, which indicates the retrieved timing.
If the DPLL generates a clock (WobbleCLK), which is locked to the wobble, a cascaded analog PLL can be used to generate the clock (WriteCLK) for the recording of channel data. This second PLL removes the jitter generated by the limited frequency of the DCO master clock in the previous DPLL. In fact the limited time resolution of the DCO generate a large jitter, which is not acceptable for recording.
The signal obtained from the recording medium is not a pure sinusoidal signal, because it is modulated by the ADIP data. In the case of DVD+RW it is bi-phase modulated and the wobble carrier is partially suppressed. As described in the Standard "ECMA-337: Data Interchange on 120 mm and 80 mm Optical Disk using +RW Format - Capacity: 4,7 and 1,46 Gbytes per Side", the modulation is not a suppressed carrier modulation, because of each 93 wobbles, which correspond to two sync frames, only eight wobbles are phase modulated with ADIP information.
In the case of BluRay Disk the wobble signal is modulated using two methods in an intermixed manner: Minimum Shift Keying cosine variant (MSK-cos) and Harmonic Modulated Wave (HMW). Only some of the wobble periods are bi-phase modulated. They are the wobble periods in the middle of an MSK mark.
In both cases the 180° phase shift due to the modulation produces a phase error in the DPLL, generating an inverted phase in the correction loop of the phase locked loop. This error could affect the high precision, which is required at the output of the phase locked loop. The reconstructed wobble clock at the output of the phase locked loop needs to be very precise, otherwise there are two consequences:
1. The wobble demodulation is not properly synchronized and generates a higher error rate.
2. The analog PLL generates a larger jitter of the WriteCLK with a bad impact on the recording quality. The phase error of the wobble clock cannot be rejected in the analog PLL because its frequency is very low.
Possible solutions to reduce the phase error in the DPLL exist. One is the pre-filtering of the DPLL, rejecting the modulation only at the input of the DPLL and not at the input of the demodulator. However, this solution has several drawbacks, namely the complexity, the delay, and the accuracy of the filter.
Another solution concerns the rejection of the error in the phase loop of the DPLL using a very low cut-off frequency. This solution also has some drawbacks, namely the small lock range and the long lock-in time.

It is an object of the invention to propose an improved circuit for wobble demodulation, which rejects the 180° phase shift due to the modulation.

According to the invention, this object is achieved by a circuit for demodulating a wobble signal including at least one inverted wobble with a digital demodulator from a signal obtained from an optical recording medium, which is not a suppressed carrier signal, wherein a Costas loop correction block is provided for the inverted wobbles. This solution can very easily be implemented and does not have the mentioned drawbacks. It is well known in the literature to use a Costas loop for carrier phase recovery from suppressed-carrier modulation signals, e.g. for the demodulation of suppressed carrier BiPhase Shift Keying data. See, for example, "PSK Demodulation (Part 1)", WJ Tech Notes, from WJ Communications (www.wj.com). However, the adoption of a Costas loop is not self-evident because in the present case the carrier is not suppressed. The carrier can in fact be extracted without the Costas loop. However, the use of the Costas loop has the advantage that a lower phase error of the PLL is achieved.

The invention is mainly related to two main aspects. The first aspect is the application of a Costas loop to the DPLL for the synchronization of a DVD+RW and BD demodulator. The second aspect concerns the specific design of the Costas loop for the precise synchronization of the DVD+RW and BD demodulator, which shall be explained in the following description with reference to the figures specifying an exemplary embodiment of the invention. It is understood that the invention is not limited to this exemplary embodiment and that specified features can also expediently be combined and/or modified without departing from the scope of the present invention. In the figures:
- Fig. 1: is a block diagram of a circuit for wobble demodulation according to the invention,
- Fig. 2: shows the ADIP modulation rules for DVD+RW, and

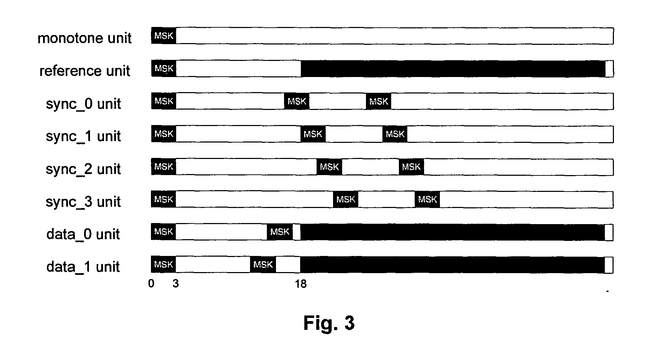

- Fig. 3: shows the ADIP modulation rules for BluRay Disk.

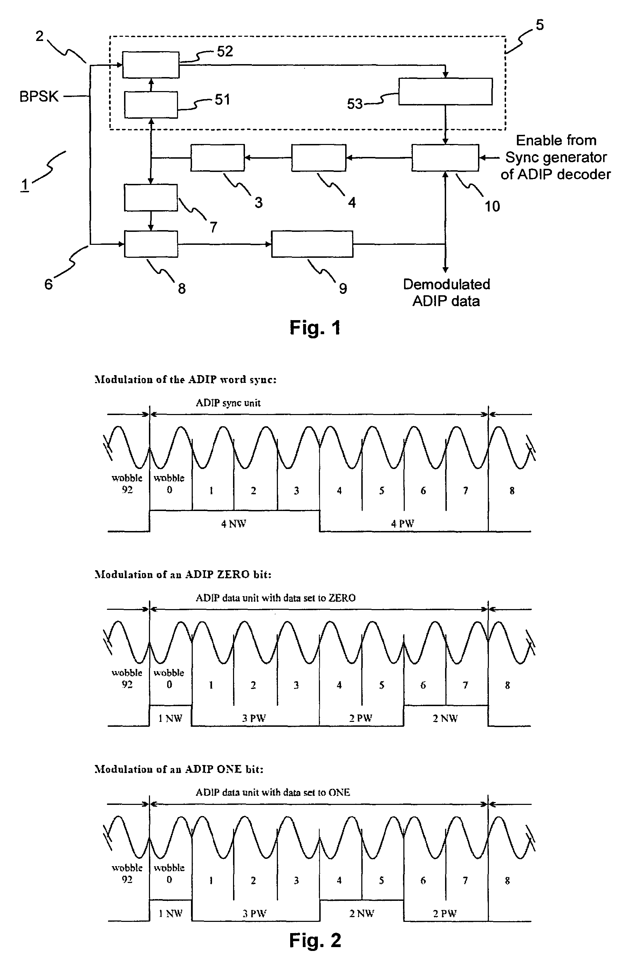

In Fig. 1 an exemplary block diagram of a circuit for wobble demodulation according to the invention is shown. The presented block diagram shows the DPLL for the wobble recovery and the bi-phase digital demodulator for the ADIP data according to the DVD+RW format. The same block diagram is applicable for BluRay Disk, but in this case only a part of the demodulator is included. The demodulator 1 is an I-Q-demodulator with a Costas loop. The Q-path 2 is used as a digital phase locked loop and includes a digital controlled oscillator 3, a loop filter 4 and a phase detector 5. The phase detector 5 is a correlator, which includes a quadrature sinusoid generator 51, a multiplier 52, and an integrator and dump 53. The I-path 6 is used for demodulation and includes a sinusoid generator 7, a multiplier 8, and an integrator and dump 9. When a 180° phase shift is received, due to bi-phase modulation, the phase detector 5 feeds an inverted phase error to the loop filter 4. In order to avoid this inversion, which results in an increased phase error of the phase locked loop, a correction is applied by a Costas loop correction block 10.
The correction block 10 advantageously is a multiplier, which multiplies the signals from the integrator and dump 9 and the integrator and dump 53, as it is the case of the conventional Costas loop. The correction block 10 can also be an inverter.
The output of the phase detector 5 should only be inverted when a 180° phase shift is detected.
This is, in the example shown in Fig. 1, achieved by using the demodulation path 6 for the detection of the 180° phase shift. This is the so called hard limited version of a Costas Loop, because the output from the demodulation path 6 is hard-limited.
However, this solution is limited by the error performance of the demodulator 1. An error at the output of the demodulator 1 also generates a phase error in the DPLL loop 2.
A more robust solution is achieved by using information from an ADIP decoder, which is explained below.

This solution is different for the two cases of DVD+RW and BD. Therefore, in case of double standard demodulation, the correction block 10, is configured in a different way for the two cases. The first case concerns DVD+RW.

As defined in the Standard "ECMA-337: Data Interchange on 120 mm and 80 mm Optical Disk using +RW Format - Capacity: 4,7 and 1,46 Gbytes per Side", for DVD+RW each ADIP word consists of one ADIP sync unit plus 51 ADIP data units. The ADIP units are modulated by inverting some of their eight wobble cycles. A positive wobble (PW) is a wobble which starts moving towards the inside of the disk. A negative wobble (NW) or inverted wobble is a wobble which starts moving towards the outside of the disk. All monotone wobbles are positive wobbles. An ADIP sync unit includes four inverted wobbles for word sync and four monotone wobbles. An ADIP data unit includes one inverted wobble for bit sync followed by three monotone wobbles and four wobbles representing one data bit. The ADIP modulation rules applicable to DVD+RW are shown in Fig. 2. As can be seen, for DWD+RW a 180° phase shift occurs in two cases, namely in the case of the sync wobbles and the data wobbles. Sync wobbles are the wobbles 0, 1, 2, 3 of the ADIP sync unit and wobble 0 of the ADIP ZERO bit and the ADIP ONE bit. Data wobbles are the wobbles 4, 5, 6, 7 of the ADIP unit.
The more robust solution considers the structure of the ADIP data. The correction block 10 is only used when the ADIP decoder has locked the ADIP word sync. Before that moment the correction block 10 does not consider the data from the integrator and dump 9.
After the lock of ADIP word sync, the decoder knows the time of sync wobbles and data wobbles.
In the case of sync wobbles, the correction block 10 forces the signal from the phase detector 5 to be inverted anyhow, without any consideration of the signal from the integrator and dump 9. Any error in the demodulation sync wobbles does not affect the phase error of the DPLL.
In case of monotone wobbles, i.e. other than sync and data wobbles, the correction block 10 does not invert the signal from the phase detector 5, without any consideration of the signal from the integrator and dump 9. Any error in the demodulation sync wobbles does not affect the phase error of the DPLL.
In the case of data wobbles, the correction block 10 works as in the Costas loop. It inverts the signal from the integrator and dump 9 only when a 180° phase shift is detected in the demodulation path 6 at the output of the integrator and dump 9. Only in the case of a data wobble an error in the demodulation affects the phase error of the PLL. The effect is, however, lower than the effect which is always caused without the correction in the DPLL loop 2. Without correction the error due to the 180° phase shift occurs at each data wobble. With the correction it occurs only when a wrong data wobble is demodulated at the output of the integrator and dump 9.

The following table summarizes the logic of the correction block 10 for DVD+RW, i.e. the output of the correction block 10 in dependence of the output of the integrator and dump 9 and the output of the integrator and dump 53.

| **Output 10** | **wobble** | **ADIP decoder** |
|---|---|---|
| = Output 53 | | Not locked |
| = - Output 53 | Sync | Locked |
| = (sign(output 9))*Output 53 | data | Locked |
| = Output 53 | others | Locked |

The above strategy of the correction needs to be adapted for BD. HMW modulation has no effect on the DPLL because it is rejected in the correlation of the Q-path 2. It gives no contribution after the integrate and dump 53. On the other hand the MSK mark might cause a phase error. Therefore, it should be corrected by the correction block 10.
Specifically the middle wobble of the MSK mark behaves as for the case of DVD+RW because it is bi-phase modulated. The side wobbles of the MSK mark, when they are correlated with the local wobble at the output of the quadrature sinusoid generator 51, cause a deteriorated characteristic of the phase detector 5. It is, therefore, advisable to neglect them.
Consequently the correction block 10 needs to consider the following cases, according to the timing information received from the ADIP decoder.
In the following Mid-Sync wobbles are defined as middle wobbles of sync MSK marks. They are the wobble 1 in all ADIP units and the wobbles 17 and 27 in the sync_0 unit, the wobbles 19 and 29 in the sync_1 unit, the wobbles 21 and 31 in the sync_2 unit, and the wobbles 23 and 33 in the sync_3 unit. For mid-sync wobbles the correction inverts the signal from the integrate and dump 53 anyhow. The action of the correction is not different from the sync wobbles for DVD+RW, only the timing is different.
In the following data wobbles are defined as the middle wobbles of data MSK marks. They are the wobbles 13 and 15 in the data_0 unit and the data_1 unit. For data wobbles the correction considers the output of the integrate and dump 9 and inverts the sign from the integrate and dump 53 accordingly. The action of the correction is not different from the data wobbles for DVD+RW, only the timing is different.

In the following Side-Sync wobbles are defined as the side wobbles of all MSK marks. The output of the correction is cleared (0), to avoid any unpredictable contribution.
The following table summarizes the logic.of the correction block 10 for BD, i.e. the output of the correction block 10 in dependence of the output of the integrator and dump 9 and the output of the integrator and dump 53.

| **Output 10** | **wobble** | **ADIP decoder** |
|---|---|---|
| = Output 53 | | Not locked |
| = - Output 53 | Mid-Sync | Locked |
| = (sign(output 9))*Output 53 | data | Locked |
| = 0 | Side-Sync | Locked |
| = Output 53 | others | Locked |

Though the invention has been described with reference to optical recording, it is likewise possible to apply the invention to other applications where unsuppressed carrier biphase modulation is adopted.

## Claims

1. Circuit for demodulating a wobble signal including at least one inverted wobble (NW) with a digital demodulator (1) from a signal obtained from an optical recording medium, which is not a suppressed carrier signal, **characterized in that** a Costas loop correction block (10) is provided for the inverted wobbles.

2. Circuit according to claim 1, whereby the demodulator (1) is an I-Q-demodulator.

3. Circuit according to claim 1 or 2, whereby the occurrence of an inverted wobble is detected by a demodulation path (6) of the demodulator (1).

4. Circuit according to one of claims 1 to 3, whereby the occurrence of an inverted wobble (NW) is deduced by using information from an ADIP decoder.

5. Circuit according to one of claims 1 to 4, whereby the optical recording medium is a DVD+RW.

6. Circuit according to one of claims 1 to 4, whereby the optical recording medium is a BluRay Disk.

7. Apparatus for reading from and/or writing to optical recording media, **characterized in that** it includes a circuit according to one of claims 1 to 6 for wobble demodulation.
